# EUROPEAN PATENT APPLICATION

(11) **EP 4 092 866 A1**
(43) Date of publication of application: **23.11.2022**
(21) Application number: 22173585.5
(22) Date of filing: 16.05.2022
(51) Int. Cl.: H02J 7/00, B60L 58/14

(54) **EMERGENCY CHARGING SYSTEM AND METHOD FOR A LITHIUM BATTERY**

(30) Priority: 20.05.2021 IT 202100013121
(71) Applicant: Elsa Solutions S.r.l., 40026 Imola (BO) (IT)
(72) Inventor: DAL POZZO, Davide, 40026 IMOLA (BO) (IT); GONFIANTINI, Michele, 40026 IMOLA (BO) (IT)
(74) Representative: Studio Torta S.p.A.

(57) **Abstract**

An emergency charging system (10) for a battery (1) provided, within a casing (1'), with a power storage module (2) with a plurality of elementary cells (4) and having a positive pin (HV⁺) and a negative pin (HV⁻) with a battery voltage (V_{b}) between them, and with an electronic management module (6), which is coupled to the power storage module in order to manage and monitor the operation of the battery, the battery having a positive terminal (M⁺) and a negative terminal (M⁻), which are connected, during a power charging phase, to an external battery charger in order to charge the elementary cells of the power storage module. An electronic circuit (12) is integrated in the casing, is connected to the positive and negative terminals of the battery and is further coupled to the power storage module so as to acquire the battery voltage; the electronic circuit detects a discharge condition of the elementary cells and implements an emergency charging path (P) in order to transfer an electric emergency charging current (Iᵣ) to the power storage module, which bypasses the electronic management module.

## Description

### CROSS-REFERENCE TO RELATED APPLICATIONS

This patent application claims priority from Italian patent application no. 102021000013121 filed on May 20, 2021.

### TECHNICAL FIELD

This solution relates to an emergency charging system and to an emergency charging method for lithium batteries, in particular for so-called stationary storage batteries, used for example for storage from renewable energies, or for so-called traction batteries, used with power supply function for drives and/or electric motors in industrial vehicles, robots or electric drive machinery powered by batteries.

### PRIOR ART

Industrial electric drive vehicles are known and widely used, such as forklifts or pallet jacks, human-driven or autonomous vehicles, industrial or road cleaners or sweepers, shuttles for intralogistics or electric tractors, powered by batteries.

Traditional power supply batteries typically are lead batteries or sometimes lithium batteries, with a weight and dimensions that are anyway significant, since they are sized so as to permit a proper operating range of the electric drive vehicle.

In a known manner, typically, lithium batteries are internally provided with a management system (so-called BMS
- Battery Management System), which is designed to manage and monitor operation thereof, for example, but not exclusively, during a corresponding charging phase. In particular, during the charge, the battery management system is interfaced with an external battery charger and provides a charging current request signal through communication protocols, such as, by way of non-exhaustive examples, Rs485, CANBus, CANOpen, EtherCAT, or through analog signal references, such as, by way of non-exhaustive examples, PWM
- Pulse Width Modulation signals, or 0-10 Volt or 4-20 mA analog references.

In some cases, for these electric drive vehicles, periodic charges of the corresponding lithium batteries cannot be carried out and, therefore, due to internal self-discharge of the cells and to power consumption of the battery management system (which is powered by the same battery), a complete discharge of the lithium battery (so-called deep discharge) may occur.

This always poses a problem and especially applies to those batteries vehicles that are used in an industrial production context, where the impossibility to use the vehicle is extremely disadvantageous.

Similarly, battery storage systems can be subjected to blackouts of the primary and secondary (or backup) power supply source (such as a heat engine generator, a fuel cell generator or the public electrical grid), operating anyway in power-supplying conditions until complete discharge of the corresponding lithium battery. If the discharge situation lasts long, because of the blackout and because of faults in the backup power supply source, the internal self-discharge of the cells and the consumptions of the battery management system may, again, lead the lithium battery to a deep discharge situation.

In these cases, the lithium battery cannot normally be charged with an external battery charger, since the battery management system, due to the deep discharge condition, is not able to be interfaced with the battery charger in order to permit the power charge (for example, not being capable of generating the charging current request signal, due to not having enough energy) and, furthermore, is not able to switch an internal protection relay, which is designed to allow the electric charging current to be transferred to corresponding power storage cells.

Therefore, nowadays, the power supply and/or movement of electric drive vehicles whose lithium battery is in a deep discharge condition typically requires the emergency intervention of expert technicians on-site, where the vehicle in standstill state is located.

On-site technical interventions can involve an attempt to directly power the cells of the lithium battery (with the possibility of breaking because the integrity of the battery was jeopardized); or the replacement of the exhausted battery with a new one (with the issue of how to recover the exhausted lithium battery avoiding damaging it; the battery, for example, can be sent to the manufacturer or to an authorized workshop to restore it).

In any case, these interventions are expensive and time-consuming, for example since they require the intervention of operators on site, which cannot always be achieved in short times, with consequent serious damages for users due to the disservice caused by the lithium battery.

### DESCRIPTION OF THE INVENTION

The aim of the present solution is to overcome the drawbacks discussed above, providing an emergency charging solution for a lithium battery in a deep discharge condition, which allows users to avoid having to resort to the emergency solutions described above and, in particular, to the intervention of expert technicians and/or to the replacement of the exhausted battery.

According to this solution, an emergency charging system and method for lithium batteries are therefore provided, as defined in the appended claims.

### BRIEF DESCRIPTION OF THE DRAWINGS

The invention will be best understood upon perusal of the following detailed description of embodiments thereof, by mere way of non-limiting example and with reference to the accompanying drawings, wherein:
- Figure 1 shows a simplified block diagram of a lithium battery provided with an emergency charging system according to an embodiment of the present solution;
- Figure 2 shows a flow chart of operations carried out by the emergency charging system; and
- Figure 3 is a general block diagram of an electronic circuit of the emergency charging system.

### EMBODIMENTS OF THE INVENTION

As described in detail hereinafter, an aspect of the present solution entails integrating, within a lithium battery (for example, a traction battery or a stationary storage battery), an electronic emergency charging system, which is configured to detect an emergency charging condition, namely a condition of deep discharge of the cells of the lithium battery, and thereby implement an emergency charging current path, which bypasses the BMS module and the associated protection relay.

This charging path allows a preliminary or initial charge of the cells to be carried out, up to a charge threshold that is such as to enable the supply of power to the BMS module and the consequent restoration of the normal operation of the lithium battery, in particular in terms of charging it by means of an external battery charger.

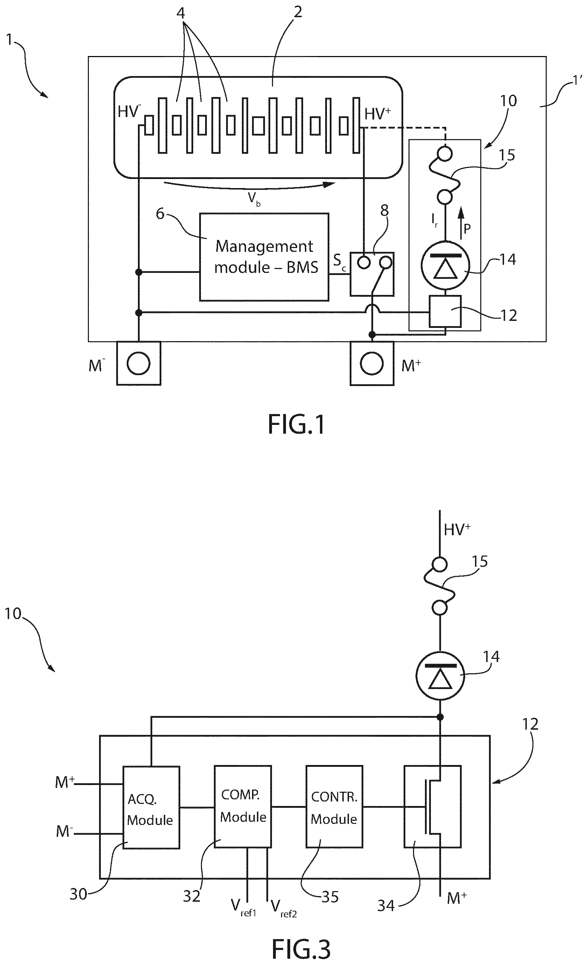

In detail, Figure 1 shows a battery 1, in particular a traction or stationary-storage lithium battery, comprising, within a casing 1', a power storage module 2 including a plurality of elementary cells 4 and having a positive pin (HV⁺) and a negative pin (HV⁻) with a battery voltage V_{b} between them, for example equal to 9, 12, 24, 36 or 48 V (depending on the application to which the battery 1 is destined).

The battery 1 comprises, within the casing 1', a BMS - Battery Management System module (or a similar electronic management module, of a known type, here not described in detail) 6, which is coupled to the power storage module 2 and is designed to manage and monitor overall operation of the batter 1, for example, but not exclusively, during a corresponding charging phase. In a known manner, the BMS module 6 integrates a suitable electronics for the management of the battery 1 and suitable safety and protection elements and means for detecting the conditions of the elementary cells 4 of the battery 1.

The battery 1 has, externally to the casing 1', a positive terminal (M⁺) and a negative terminal (M⁻), which are designed to be connected, for example, to an electric motor, operating element or load (not shown herein); the positive terminal (M⁺) and negative terminal (M⁻) are further designed to be connected, during a power charging phase, to a external battery charger or to another external power supply (of a known type, not shown herein) in order to charge the battery 1 and, in particular, the elementary cells 4 of the corresponding power storage module 2.

The battery 1 has, within the casing 1', a protection relay 8, which is interposed, in the embodiment shown herein, between the positive terminal M⁺ and the positive pin HV⁺ of the power storage module 2; this protection relay 8 is controlled, by means of a control signal S_{c}, by the BMS module 6, which is configured to control closing thereof and allow, for example, a charging current flow from the external battery charger to the elementary cells 4 of the power storage module 2.

As discussed above, in case the elementary cells 4 of the power storage module 2 are in a deep discharge condition (namely, with the battery voltage V_{b} below a minimum lower threshold), the BMS module 6 (which is powered by the same power storage module 2) has not enough energy to be interfaced with the external battery charger and, in particular, to switch the protection relay 8 in a closing state. Therefore, in this case, charge of the power storage module 2 is inhibited.

Hence, an aspect of the present solution entails integrating in the battery 1 (in particular, within the corresponding casing 1') an emergency charging system 10, which is configured to detect a deep discharge condition of the elementary cells 4 of the power storage module 2 and, in that case, to implement an emergency charging path P in order to transfer an electric emergency charging current Iᵣ from the external battery charger to the power storage module 2, this emergency charging path P bypassing the operation of the BMS module 6 and the associated protection relay 8 (namely, providing a current path in parallel and alternative to the one through the protection relay 8).

In detail, in the embodiment shown herein, the emergency charging system 10 is connected to the positive and negative terminals M⁺, M⁻ of the battery 1, so as to receive the power supply from the external battery charger, when the external battery charger is coupled to the positive and negative terminals M⁺, M⁻ for charging of the battery 1.

The emergency charging system 10 is further coupled to the positive and negative pins HV⁺, HV⁻ of the power storage module 2, so as to acquire the battery voltage V_{b} present between these pins; the same emergency charging system 10 comprises an electronic charging circuit 12, which is configured to compare the value of the battery voltage V_{b} with one or more voltage reference thresholds and to enable or disable the emergency charging path P depending on the result of the voltage comparison.

The electronic charging circuit 12 is distinct and separate from the electronic management module 6 of the battery 1 and operates regardless and independently of the normal and correct operation of the electronic management module 6. In this way, the aforesaid electronic charging circuit 12 is able to implement the emergency charge even in deep discharge conditions, when the BMS module 6 is not able to operate (and, in particular, to control the aforesaid protection relay 8).

In the embodiment shown herein, the electronic charging circuit 12 is coupled to the positive pin HV⁺ of the power storage module 2 through the interposition of a protection diode 14 (in particular, protecting against polarity inversion), which is configured to allow current to flow only in the charging direction (namely, towards the positive pin HV⁺), in series to a protection fuse 15 (in particular, protecting against overcurrent) of the resettable or non-resettable type, which is designed to limit the current flowing along the emergency charging path P (which comprises the same protection diode and fuse 14, 15).

Therefore, the protection diode 14 has anode connected to the output of the electronic charging circuit 12 and cathode connected to the protection fuse 15. The protection fuse 15 can be adjusted based on the features of the battery 1 and based on the emergency charging current Iᵣ to be allowed.

As discussed more in detail below, the electronic charging circuit 12 internally comprises a switch element, which is controlled, based on the above voltage comparison, so as to open or close the emergency charging path P, in the example between the positive pin HV⁺ of the power storage module 2 and the positive terminal M⁺, which is connected to the external battery charger. In particular, as already mentioned above, closing of this switch element allows the electric charging current to flow from the external battery charger to the aforesaid positive pin HV⁺, thereby implementing the emergency charge of the elementary cells 4 of the power storage module 2.

The aforesaid emergency charge is implemented in a totally autonomous and automated manner within the battery 1, by the emergency charging system 10, with no need for interventions of the user of the battery 1 or of expert technicians; therefore, intervention of the emergency charging system 10 is completely transparent for the user of the battery 1.

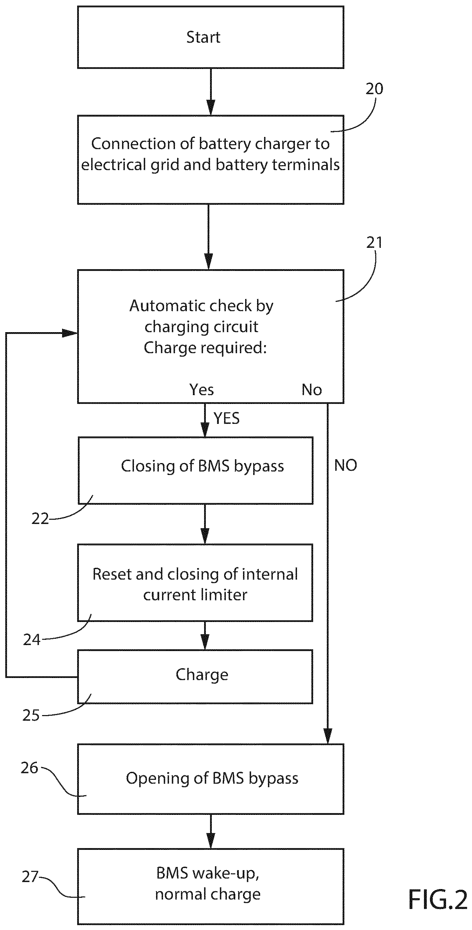

As shown in Figure 2, the operations implemented by the emergency charging system 10 comprise, after a preliminary step (step 20) of connection of the external battery charger to the electrical grid (or to another power supply source) and to the positive and negative terminals M⁺, M⁻ of the battery 1, the automatic check, by the electronic charging circuit 12, of the need to implement the emergency charge, step 21.

To this purpose, as discussed above, the electronic charging circuit 12 carries out the comparison between the battery voltage V_{b} present between the positive pin HV⁺ and the negative pin HV⁻ of the power storage module 2 and a first reference voltage V_{ref1}, with a value that, if required, can be adjusted and is indicative of the presence of a deep discharge condition of the elementary cells 4 of the power storage module 2. For example, the electronic charging circuit 12 determines the need to implement the emergency charge in case the battery voltage V_{b} is smaller than the first reference voltage V_{ref1}.

In case it determines this need, the electronic circuit 12 closes the emergency charging path P, step 22, to allow the electric charging current to flow from the external battery charger to the power storage module 2 and, hence, the corresponding elementary cells 4 to be charged. In particular, the emergency charging path P bypasses the BMS module 6 of the battery 1 and the associated protection relay 8.

As shown in step 24, in case the protection fuse 15 is a resettable fuse, this fuse can be reset and closed after closing of the emergency charging path P.

Then, step 25, the charge of the elementary cells 4 of the power storage module 2 is carried out and continues until the electronic charging circuit 12 establishes that the emergency charge may end.

To this purpose, the electronic charging circuit 12 carries out, in this case, the comparison between the battery voltage V_{b} present between the positive HV⁺ and negative HV-pins of the power storage module 2 and a second reference voltage V_{ref2}, with a greater value than the first reference voltage V_{ref1}, which, if required, can be adjusted as well (this check is schematically carried out during the aforesaid step 21). For example, the value of the second reference voltage V_{ref2} corresponds to a threshold value of the battery voltage V_{b}, which is sufficient to power the BMS module 6 and, hence, to restore the normal operation of the battery 1.

In case the emergency charge is no longer necessary and can be ended (for example, since the value of the battery voltage V_{b} is greater than or equal to the second reference voltage V_{ref2}), the electronic charging circuit 12 opens the emergency charging path P, step 26, interrupting bypass of the BMS module 6.

Subsequently, as schematically indicated in step 28, the BMS module 6, which in the meantime woke-up due to the received power supply, closes the protection relay 8, allowing the power storage module 2 to be normally charged by the external battery charger, under the control and supervision of the same BMS module 6.

More in detail and according to Figure 3, in a possible embodiment, the electronic charging circuit 12 of the emergency charging system 10, which is coupled to the positive and negative terminals M⁺, M⁻ of the battery 1 in order to be powered by the external battery charger, comprises a voltage acquisition module 30, which is designed to acquire the battery voltage V_{b} of the power storage module 2. In the embodiment shown herein, the voltage acquisition module 30 is coupled to the positive pin HV⁺ of the power storage module 2 through the protection diode 14 and the protection fuse 15.

The electronic circuit 12 further comprises a comparator module 32, which is coupled to the aforesaid voltage acquisition module 30 and is configured to compare the value of the acquired voltage with the first or the second reference value V_{ref1}, V_{ref2}, in order to determine the closing or, respectively, the opening, of the charging current path P.

As indicated above, the comparator module 32 can advantageously be adjusted to different intervention thresholds, depending on the specific need and on the specific application (in a known manner, "Jumper" or "Dip Switch" elements or similar adjustment elements, which are not shown herein, can be used to this purpose).

The electronic circuit 12 further comprises a switch element 34, for example a MOSFET, and a control module 35.

The switch element 34 has, in the embodiment shown herein, a first current conduction terminal connected to the positive terminal M⁺ of the battery 1, a second current conduction terminal coupled to the positive pin HV⁺ of the power storage module 2 through the protection diode 14 and the protection fuse 15 and a control terminal connected to the output of the control module 35.

In a manner that is not shown herein, a heat sink may be present to disperse heat losses of the MOSFET during the flow of the emergency charging current.

The control module 35, which is connected to the output of the comparator module 32, is configured to generate a control signal for the switch element 34, depending on the comparison of the acquired voltage with the first and the second reference values V_{ref1}, V_{ref2} by the same comparator module 32, so as to close or open the switch element 34, thus closing or opening the emergency charging path P.

The aforesaid electronic charging circuit 12 is made, for example, in an integrated manner, with the associated electronic components coupled to and supported by a printed circuit board - PCB (not shown herein), which is designed to be properly arranged within the casing 1' of the battery 1, not being visible from the outside and not requiring any shape or interface changes to the battery 1 (hence, without needing changes to the connection and the wiring of the interface to the outside, for example to an electric drive vehicle or to other electric apparatuses of a power storage system).

The advantages afforded by the solution disclosed herein are evident from the above description.

In particular, the solution allows lithium batteries in emergency condition, whose cells are in a deep discharge condition, to be charged in an efficient, economic, quick and automated manner, without maintenance interventions of expert operators and with no need to replace the lithium batteries, allowing operations to be carried out on-site, even by operators that are not technically trained (as a matter of fact, the intervention of the system is automatic and does not require technical skills by the end user).

This solution allows any generic external battery charger provided with a charging curve that is independent of references received from the battery management system (so-called fixed charging curve battery chargers) to charge the lithium battery; similarly, this solution also allows any external battery charger provided with a digital control (for example, through CANBUS) or an analog control (for example, through PWM signal) to carry out the preliminary charging cycle in an emergency charging condition, thus recovering the lithium battery, which was in a state of deep discharge, in a totally automated manner without intervention of operators.

Advantageously, the system according to the present solution does not involve any additional energy consumption, since it does not get power from the lithium battery in which it is integrated, but it exclusively receives energy from an external battery charger or power supply when it is activated and connected to the terminals of the battery.

Therefore, the system according to the invention allows a simple charging of lithium batteries in electric drive vehicles that came to a standstill because of an exhausted battery or, similarly, in stationary storage systems, avoiding, for example, the effects of blackout of the power supply system.

Hence, this solution avoids, in many cases, prolonged disservices and offers a greater environmental protection, avoiding a useless early deterioration of batteries that can possibly be left in an unused electric drive vehicle and are deeply discharged as well as avoiding standstill/blackout situations in systems that store power from renewable sources.

Furthermore, advantageously, the system according to the invention can easily be configured depending on the lithium batteries within which it is installed, not requiring, in addition, changes to the software functions and to the hardware specifications of the BMS module of the same batteries.

Variations and changes can be applied to the solution disclosed herein, without for this reason departing from the scope identified in the appended claims.

In particular, the present solution enables recovery from deep discharge and can be integrated in lithium batteries of different technologies and types, by way of non-exhaustive example lithium-ion or Li-Ion batteries, lithium polymer or LP batteries, lithium iron phosphate or LFP or LiFePO4 batteries, lithium-titanate or LTO batteries, lithium nickel manganese cobalt or NMC batteries, lithium nickel cobalt aluminium or NCA batteries and batteries with lithium cells of different shapes and dimensions as well as with a nominal voltage ranging, for example, from 9 V to 48 V.

## Claims

1. A battery (1) having, within a casing (1'), a power storage module (2), which includes a plurality of elementary cells (4) and has a positive pin (HV⁺) and a negative pin (HV⁻) with a battery voltage (V_{b}) between them, and an electronic management module (6), which is coupled to the power storage module (2) and is designed to manage operation of the battery (1), said battery (1) having, externally to the casing (1'), a positive terminal (M⁺) and a negative terminal (M⁻), which are designed to be connected, during a power charging phase, to an external battery charger in order to charge the elementary cells (4) of the power storage module,
further comprising, within the casing (1'), a protection switching element (8), which is interposed between a respective terminal (M⁺) of the battery (1) and a respective pin (HV⁺) of the power storage module (2) and is controlled, by means of a control signal (S_{c}), by the electronic management module (6), said electronic management module (6) being configured to control closing of the protection switching element (8) and allow a charging current flow from the external battery charger towards the elementary cells (4) of the power storage module (2) in a normal charging condition;
**characterized by** comprising an emergency charging system (10) having an electronic circuit (12), which is distinct and separate from said electronic management module (6), is integrated in said casing (1'), is connected to the positive and negative terminals (M⁺, M⁻) of the battery (1) and, furthermore, is coupled to the power storage module (2) so as to acquire the battery voltage (V_{b}); wherein said electronic circuit (12) is configured to detect, based on the value of the battery voltage (V_{b}), a state of discharge of the elementary cells (4) of the power storage module (2) and implement an emergency charging path (P) in order to transfer an electric emergency charging current (Iᵣ) towards the power storage module (2); wherein said emergency charging path (P) is designed to couple said respective terminal (M⁺) of the battery (1) to said respective pin (HV⁺) of the power storage module (2) in parallel to, and bypassing, said protection switching element (8).

2. The battery according to claim 1, wherein said electronic circuit (12) is configured to compare the value of the battery voltage (V_{b}) with a first voltage reference value (V_{ref1}), which is indicative of a deep discharge condition of said elementary cells (4), and to enable said emergency charging path (P) depending on the result of the comparison.

3. The battery according to claim 2, wherein said electronic circuit (12) is further configured to compare the value of the battery voltage (V_{b}) with a second voltage reference value (V_{ref2}), greater than the first voltage reference value (V_{ref1}), and to disable said emergency charging path (P) depending on the result of the comparison.

4. The battery according to any one of the preceding claims, wherein said electronic circuit (12) is coupled to the positive pin (HV⁺) of the power storage module (2) by means of a protection diode (14), configured to allow current to only flow in a charging direction towards said positive pin (HV⁺), in series to an overcurrent protection fuse (15), said emergency charging path (P) comprising said protection diode (14) and overcurrent protection fuse (15).

5. The battery according to any one of the preceding claims, wherein said electronic circuit (12) internally comprises a switch element (34), which is closed or opened in order to enable or disable said emergency charging path (P); wherein the closing of said switch element (34) allows the electric emergency charging current (Iᵣ) to flow from the external battery charger towards said power storage module (2), thus implementing the emergency charge of the elementary cells (4).

6. The battery according to claim 5, wherein said electronic circuit (12) further comprises: a voltage acquisition module (30), which is configured to acquire the battery voltage (V_{b}); a comparator module (32), which is coupled to said voltage acquisition module (30) and is configured to compare the acquired voltage value with a first (V_{ref1}) or a second (V_{ref2}) reference value; and a control module (35), which is connected to the output of the comparator module (32) and is configured to generate a control signal for the switch element (34), depending on the comparison between the acquired voltage and the first and second reference value (V_{ref1}, V_{ref2}), so as to close or open the switch element (34) and thereby close or open the emergency charging path (P).

7. The battery according to claim 5 or 6, wherein said switch element (34) is a MOSFET transistor having a first current conduction terminal connected to the positive terminal (M⁺) of the battery (1), a second current conduction terminal coupled to the positive pin (HV⁺) of the power storage module (2) and a control terminal connected to the output of the control module (35).

8. The battery according to any one of the preceding claims, of the Lithium type, for stationary storage from renewable energies or for traction with power supply function for operating elements and/or electric motors.

9. An emergency charging method for a battery (1) having, within a casing (1'), a power storage module (2), which includes a plurality of elementary cells (4) and has a positive pin (HV⁺) and a negative pin (HV⁻) with a battery voltage (V_{b}) between them, and an electronic management module (6), which is coupled to the power storage module (2) and is designed to manage and monitor the operation of the battery (1), said battery (1) having, externally to the casing (1'), a positive terminal (M⁺) and a negative terminal (M⁻),
comprising connecting, in a power charging phase, said positive and negative terminals (M⁺, M⁻) to an external battery charger in order to charge the elementary cells (4) of the power storage module (2); and **characterized by** comprising:
acquiring the battery voltage (V_{b});
detecting a discharge condition of the elementary cells (4) of the power storage module (2) based on the value of the battery voltage (V_{b}); and
implementing an emergency charging path (P) in order to transfer an electric emergency charging current (Iᵣ) towards the power storage module (2), independently of the operation of the electronic management module (6).

10. The method according to claim 9, wherein the battery (1) has, within the casing (1'), a protection switching element (8), which is interposed between a respective terminal (M⁺) of the battery (1) and a respective pin (HV⁺) of the power storage module (2); comprising controlling, by the electronic management module (6), closing of the protection switching element (8) and allowing a charging current to flow from the external battery charger towards the elementary cells (4) of the power storage module (2) in a normal charging condition; wherein implementing said emergency charging path (P) comprises coupling said respective terminal (M⁺) of the battery (1) to said respective pin (HV⁺) of the power storage module (2) in parallel to, and bypassing, said protection switching element (8).

11. The method according to claim 10, comprising comparing the value of the battery voltage (V_{b}) with a first voltage reference value (V_{ref1}), which is indicative of a deep discharge condition of said elementary cells (4), and enabling said emergency charging path (P) depending on the result of the comparison.

12. The method according to claim 11, further comprising comparing the value of the battery voltage (V_{b}) with a second voltage reference value (V_{ref2}), greater than the first voltage reference value (V_{ref1}), and disabling said emergency charging path (P) depending on the result of the comparison.

13. The method according to any one of claims 9-12, wherein said battery (1) is of the Lithium type.
